# EUROPEAN PATENT SPECIFICATION

(11) **EP 1 339 602 B1**
(45) Date of publication and mention of the grant of the patent: **14.07.2004**
(21) Application number: 01996492.3
(22) Date of filing: 14.11.2001
(51) Int. Cl.: B64C 13/28, F16H 25/22

(54) **ROLLER SCREW ACTUATOR**
ROLLSPINDELANTRIEB
ACTIONNEUR DE VIS A ROULEAUX SATELLITES

(30) Priority: 14.11.2000 GB 0027709
(43) Date of publication of application: 03.09.2003
(73) Proprietor: COVENTRY UNIVERSITY, Coventry CV1 5FB (GB)
(72) Inventor: MAYDEW, Mark, c/o Coventry University, Coventry CV1 5FB (GB)
(74) Representative: Hallam, Arnold Vincent
(86) International application number: PCT/GB2001/005022
(87) International publication number: WO 2002/040346

(56) References cited:
- WO-A-00/29286
- US-A- 5 120 285
- US-A- 5 144 851
- US-A- 6 059 076

## Description

The present invention relates to a roller screw actuator and particularly, but not exclusively to, a jam tolerant linear roller screw actuator (JTRS), as it is known from US-A-6 059 076, which discloses the precharacterizing features of claim 1.

Linear mechanical actuation is used in a wide range of civil and military aerospace systems, particularly for actuation of secondary flight control surfaces. Conventionally, this is achieved using ball screws or roller screws as the main output drivers. However, ball screws and roller screws are not ideal for actuation of primary flight control surfaces owing to the likelihood of their j jamming during operation. Such jamming could have severe implications for an aircraft in flight.

The present invention aims to provide an improved roller screw actuator.

Accordingly, the present invention provides a roller screw actuator comprising: an inner drive member; a sleeve coaxial with said inner drive member; an outer drive member coaxial with and rotatably supported on said sleeve, one of said drive members being an input drive member and the other of said members being an output drive member; at least one planetary roller rotatably engaged between said inner drive member and said sleeve such that rotary movement of one of said sleeve and said inner drive member causes relative linear movement of the other of said sleeve and said inner drive member; and a gearing system coupling said at least one planetary roller to one of said inner and outer drive members; wherein the arrangement is such that in a first, unjammed condition and in a second, jammed condition, the lead rate of the screw actuator is maintained substantially constant.

In a preferred form of the invention said gearing system couples said at least one planetary roller to said sleeve and said outer drive member thereby to cause said sleeve to rotate in the same direction as said input drive member at a reduced speed relative to said input drive member. In said first condition, drive is transmitted to said output drive member by way of relative rotation of said input drive member, said at least one planetary roller, said gearing system and said sleeve;
and in said second condition drive is transmitted from said input member to said output member directly by way of said at least one planetary roller only. In said first condition, the gearing system is operable to reduce the lead rate ofthe screw actuator to match substantially that of the screw actuator in said second condition.

Preferably, said least one planetary roller is rotatable relative to said inner and outer drive members about its longitudinal axis; and said gearing system comprises support means rotatable relative to said inner and outer drive members, said support means being arranged to carry said at least one planetary roller and coupled to said outer drive member and said sleeve by a reduction gear so as to cause said at least one planetary roller to precess around said inner drive member at a preselected reduced speed.

The present invention will now be described, by way of example only, with reference to the accompanying drawings in which:
Figure 1 is a cross-section through a conventional roller screw actuator;
Figure 2 is a section through a preferred form of roller screw actuator according to the invention; and
Figure 3 is a perspective view, partly in section, of the actuator of Figure 2 in more detail.

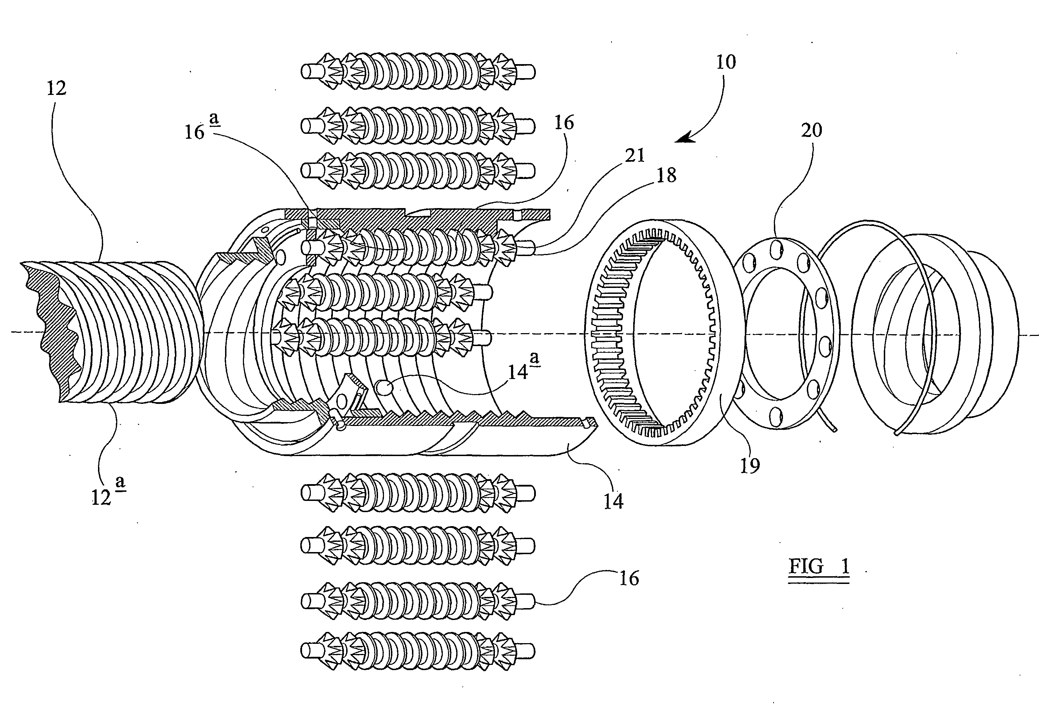

Referring to Figure 1, a conventional planetary roller screw actuator (or roller screw) is illustrated in section generally at 10. The roller screw includes an input drive member 12 in the form of a shaft or screw having an external screw thread 12a. An output drive member 14 (conventionally referred to as a nut), in the form of a generally cylindrical sleeve, surrounds at least a part of the screw 12. The nut 14 is connected to an external member (not shown) to be driven by the screw actuator, for example a flight control surface of an aircraft. The nut 14 is provided with an internal screw thread 14a, preferably having a similar pitch to the external thread 12a of the screw 12.

The outer thread 12a of the screw 12 and the internal thread 14a of the nut 14 are radially spaced such that they are not in direct engagement. Disposed in the annular space between the threads 12a, 14a are a plurality of planetary rollers 16. Each roller 16 takes the form of an elongate member or bar having an external thread 16a preferably similar in pitch to the external and internal threads 12a, 14a of the screw 12 and the nut 14 respectively. A respective spigot 18 axially protrudes from each end of the rollers 16, the purpose of which is described below.

A timing gear 19 engages with gear teeth 21 adjacent the end spigot 18 to control precessing of the rollers in conventional manner whilst preventing axial movement relative to the nut 14.

A flat ring plate 20 is located in an annular groove 22 cut around the internal circumference of the nut 14 adj acent one end thereof. The groove 22 is relatively smooth to allow the plate 20 to rotate relative to the nut 14 about an axis co-axial with that of the screw 12 and the nut 14. The plate 20 is provided with a plurality of apertures 24 in which the spigot 18 at the end of each roller 16 is seated. A similar plate is located adjacent the other end of the nut 14 in a groove similar to groove 22 and also features a plurality of apertures for seating the spigots 18 at the other end of the rollers 16.

It should be apparent that, when assembled, each roller 16 is free to rotate about its own longitudinal axis whilst being carried in spaced apart relationship at each end by the plates 20. In addition, the plates 20 are able to rotate about a central axis thereby carrying the rollers to rotate about that same axis.

In operation, an input torque, supplied by an electric motor for example, is applied to the screw 12 to rotate the screw at a predetermined speed. For illustrative purposes, it is assumed that rotation of the screw occurs in a clockwise direction.

The clockwise rotation of the screw 12 causes the planetary rollers 16 to rotate in an anti-clockwise direction about their own axes. In addition, friction between the threads 16a of the rollers 16 and the threads 12a, 14a of the screw and the nut respectively causes the rollers 116, mounted in the ring plates 20, to precess around the screw 12 in a clockwise direction.

The nut 14 is prevented from rotating but is allowed to move axially relative to the screw 12. The rotational movement of the screw 12 and the rollers 16 causes a relative linear motion, parallel to the longitudinal axis of the screw, between the screw 12 and the rollers 16, and therefore between the screw 12 and the nut 14, at a predetermined "lead rate", say *x* metres per revolution.

In some situations, however, the rollers 16 can jam within the nut 14 and are thus unable to precess around the screw 12. Under these circumstances, the threads 16a of the rollers 16 form the same contacts around the screw 12 as would a nut, thus giving the essential contact features of a nut/screw mechanism. With conventional planetary roller screw actuators, this leads to a significant change in the lead rate of the screw actuator, most often by reducing the relative linear motion between the screw 12 and the nut 14 to, say *x*/3 metres per revolution. This could cause considerable problems in actuating the flight control surfaces. This reduction, of course, is dependent on the gear rotations set by the screw 12, nut 14 and rollers 16.

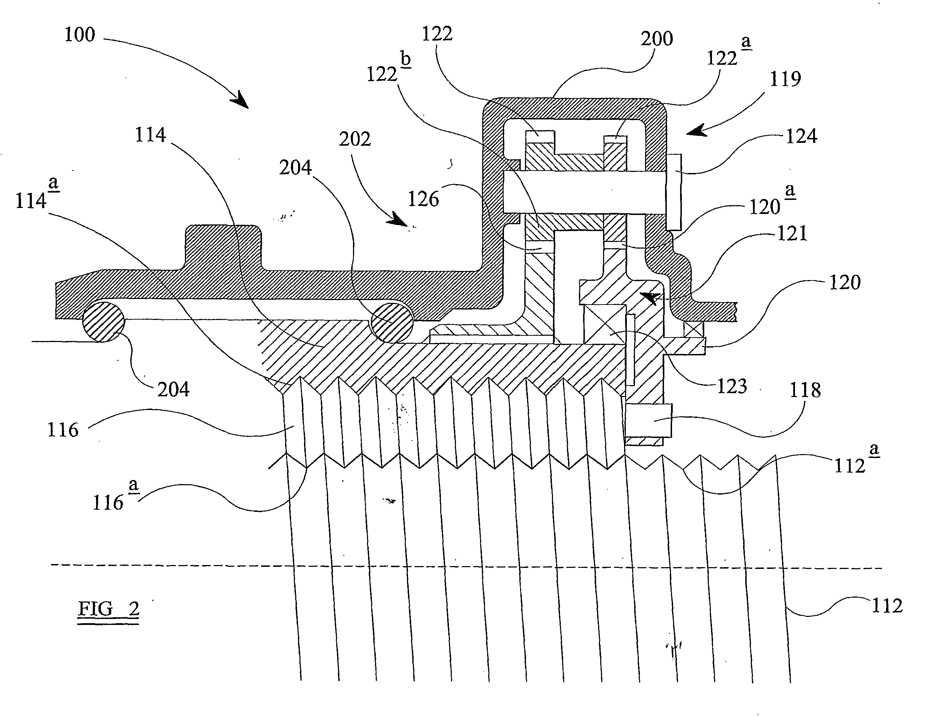

Referring to Figure 2, a preferred form of linear planetary roller screw actuator according to the invention is shown partially in section generally at 100. The screw actuator comprises a similar arrangement to that of figure 1 having an inner drive member in the form of a shaft 112 (the screw), a sleeve (the nut) 114, and one or more planetary rollers 116 rotatably mounted in two end plates 120 and located in an annular space between the screw 112 and the nut 114.

However, in addition the actuator has an outer carrier or housing 202 which forms an outer drive member and which is rotatably mounted on the nut 114 by bearings 204. The outer drive member 202 and the nut 114 are prevented from moving axially relative to one another.

In this described embodiment the inner drive member 112 is rotatable whilst the outer drive member 202 is prevented from rotating but can move axially relative to the inner drive member 112. The inner drive member 112 is thus an input drive member through which rotary drive is applied to the screw actuator. The outer drive member 202 is attached to an external member and serves as an output drive member through which linear actuation is applied to the external member.

It will be appreciated that rotary drive may alternatively be applied to the outer drive member 202 to apply linear actuation through the inner drive member 112. In this alternative case the outer drive member 202 would be free to rotate and would serve as the input drive member. The inner drive member 112 would be prevented from rotating but would be able to move axially relative to the input drive member 202.

In the screw actuator of Figure 2 the planetary rollers 16 are engaged with threads 114a,112a of the nut 114 and screw 112. The rollers 116 are also coupled to the nut 114 and the carrier 202 by way of a gearing system 119. The gearing system includes a first gear 126 which is splined or otherwise rigidly fixed to the outer surface of the nut 114 so as to be rotatable therewith, and an external end gear which is formed by a support means in the form of one end plate 120. This has a radially extending circumferential flange 121 provided with teeth 120a to form the external end gear. The end plate 120 is rotatably supported on the nut 114 by a suitable bearing 123.

The teeth of the first gear 126 mesh with an input gear 122b of a reduction gear assembly in the form of a compound gear 122. The latter is rotatably mounted on an axle 124 which is mounted in a lateral U-shaped extension 200 ofthe outer drive member 202. An output gear 122a of the gear assembly 122 meshes with the teeth 120a of the end plate 120.

It will be appreciated that it is desired to maintain a substantially constant lead rate for the screw actuator irrespective of whether or not the rollers 116 are jammed.

As stated above, it is known that in the unjammed condition, the lead rate of the screw actuator of figure 1 is x m/revolution. In the jammed condition, however, where the rollers are jammed and are unable to precess around the screw 112, the lead rate of the screw actuator reduces to, for example, x/3 m/revolution.

For the screw actuator of Figure 2, where one or more rollers 116 jam there is no relative movement between the outer drive member 202, the gearing system 119 and the rollers 116 and thus the lead rate of the screw actuator is the same as that of the screw actuator of fig.1 in the jammed condition, i.e. *x*/3 m/revolution. In order to maintain a constant lead rate, therefore, the reduction gear assembly 122 of the present invention is arranged to cause the lead rate of the screw actuator in the unjammed condition also to be *x*/3 m/revolution. This is achieved in the following manner.

In the unjammed condition, the inner drive member 112 is rotated clockwise about its longitudinal axis which causes the rollers 116 to rotate anticlockwise about their longitudinal axes. The frictional contact between the rollers 116 and both the screw 112 and the nut 114 causes the rollers 116 to precess around the screw 112 in a clockwise direction thereby carrying the end plate 120 and the end gear around with them in a clockwise direction. Since the outer teeth 120a of the end plate 120 are meshed with the input gear 122b of the compound gear 122, this compound gear is caused to rotate in an anti-clockwise direction. Since the output gear 122a of the compound gear 122 mesh with the first gear 126 the nut 114 is thus caused to rotate at a reduced speed in a clockwise direction.

Thus, clockwise rotation of the screw 112 relative to a fixed point causes clockwise rotation of the nut 114 relative to that point, but at a different rate. There is thus a decrease in relative rotational motion between the nut 114 and the screw 112, compared to that between the outer drive member 202 and the screw 112 (and the nut 14 and the screw 12 of the screw actuator of figure 1). Because it is the relative rotation of the screw 112 and nut 114 which gives rise to the relative linear movement of the screw and outer drive member 202 this results in a consequential reduction in the lead rate of the screw actuator. If the gear ratios of the end plate 120, the reduction gear assembly 122 and the first gear 126 are chosen correctly, the lead rate of the screw actuator can be reduced to the same or substantially the same as the lead rate in the jammed condition.

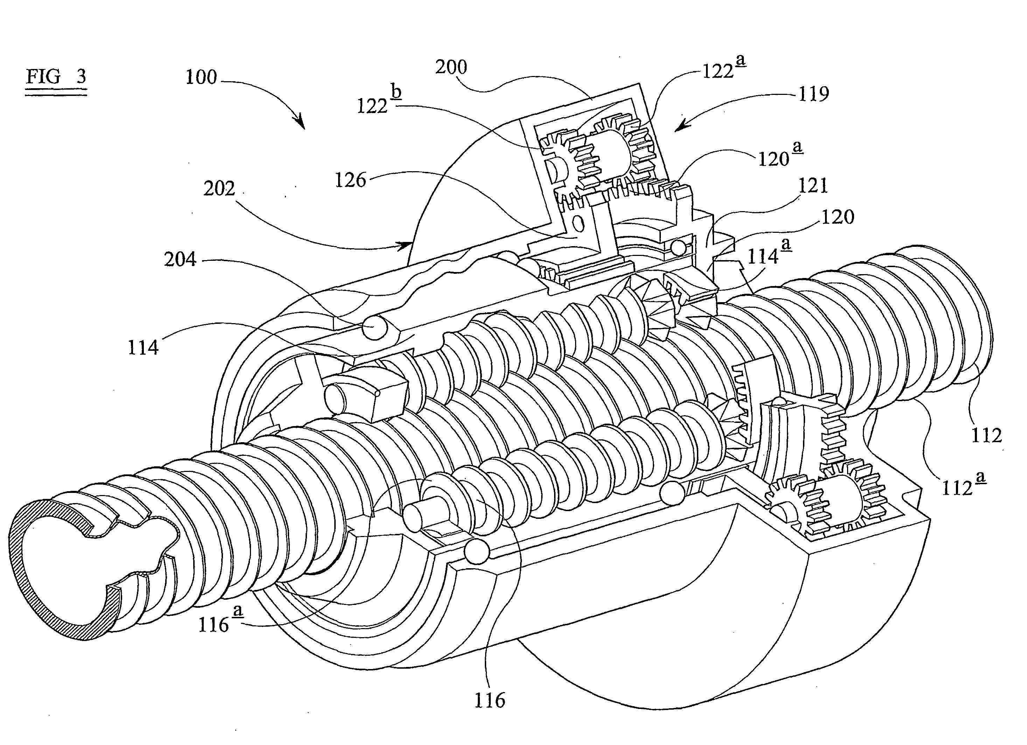

Figure 3 is a perspective view, partly in section, showing a practical form of the actuator of Figure 2 in detail. A timing gear 300 is shown which allows the rollers 116 to precess the correct amount whilst preventing axial movement.

The lead rate of the screw actuator of the present invention allows for a substantially constant lead rate, even if the rollers 116 become jammed. In addition, it will be appreciated that in this example the number of rotations of the screw 112 must be increased by a factor of three compared with the screw actuator of figure 1 to obtain the same linear movement of the outer drive member 202.

As is mentioned above, it will be appreciated that rotational drive can equally be applied to the outer drive member 202 rather than the screw. In this instance, the outer drive member 202 becomes the input drive member and the screw 112 becomes the output drive member.

In addition, the invention may be applicable also to recirculating roller screw actuators.

It will be apparent to the skilled person that the present invention is arranged to adjust the lead rate of the screw actuator in the unjammed condition to match its lead rate in the jammed condition thereby to maintain the lead rate of the screw actuator at a constant value regardless of whether the screw actuator is in the jammed or unjammed condition. This renders the screw actuator virtually insensitive to this type of failure mode. This provides significantly greater reliability and safety for flight control systems.

## Claims

1. A roller screw actuator comprising:
an inner drive member (112);
a sleeve (114) coaxial with said inner drive member (112);
an outer drive member (202) coaxial with and rotatable relative to said sleeve (114), one of said drive members being an input drive member and the other of said members being an output drive member;
at least one planetary roller (116) rotatably engaged between said inner drive member (112) and said sleeve (114) such that rotary movement of one of said sleeve (114) and said inner drive member (112) causes relative linearmovement of the other of said sleeve (114) and said inner drive member (112);
wherein the arrangement is such that in a first, unjammed condition and in a second, jammed condition, the lead rate of the screw actuator is maintained substantially constant,
**characterised in that** the roller screw actuator further comprises
a gearing system (119) coupling said at least one planetary roller to one of said inner and outer drive members (112, 114);
wherein said gearing system (119) couples said at least one planetary roller (116) to said sleeve (114) and said outer drive member (202) thereby to cause said sleeve (114) to rotate in the same direction as said input drive member at a reduced speed relative to said input drive member;

2. A roller screw actuator as claimed in claim 1 wherein:
in said first condition said sleeve (114) is rotatable relative to said outer drive member (202) and drive is transmitted to said output drive member (202,112) by way of relative rotation of said input drive member (202,112), said at least one planetary roller (116) said gearing system (119) and said sleeve (114);
and in said second condition said sleeve (114) is not rotatable relative to said outer drive member (202) and drive is transmitted from said input member (202,112) to said output member directly by way of said sleeve (114) and said at least one planetary roller only.

3. A roller screw actuator as claimed in claim 1 wherein:
in said first condition, drive is transmitted to said output drive member (202,112) byway of relative rotation of said input drive member (202, 112), said at least one planetary roller (116) said gearing system (119) and said sleeve (114);
and in said second condition drive is transmitted from said input member (202,112) to said output member directly by way of said at least one planetary roller only.

4. A roller screw actuator as claimed in claim 1, 2 or 3 wherein in said first condition, the gearing system (119) is operable to reduce the lead rate of the screw actuator to match substantially that of the screw actuator in said second condition.

5. A roller screw actuator as claimed in any of claims 1 to 4 wherein said least one planetary roller (116) is rotatable relative to said inner and outer drive members about its longitudinal axis;
and said gearing system (119) comprises support means (120) rotatable relative to said inner and outer drive members;
and wherein said support means is arranged to carry said at least one planetary roller (116) and is coupled to said outer drive member (202) and said sleeve (114) by areduction gear (122) so as to cause said at least one planetary roller (116) to precess around said inner drive member ( 112) at a preselected reduced speed relative said input drive member.

6. A roller screw actuator as claimed in any of claims 1 to 4 wherein said least one planetary roller (116) is rotatable relative to said inner and outer drive members about its longitudinal axis;
and said gearing system (119) comprises support means (120) rotatable relative to said inner and outer drive members;
and wherein said support means is arranged to carry said at least one planetary roller (116) and is coupled to said outer drive member (202) and said sleeve (114) by a reduction gear (122) so as to cause said at least one planetary roller (116) to precess around said inner drive member (112) at a preselected reduced speed relative said sleeve (14).

7. A roller screw actuator as claimed in claim 5 or 6 wherein said reduction gear (122) is rotatably supported on said outer drive member (202).

8. A roller screw actuator as claimed in claim 6 or 7 wherein:
said gearing system (119) comprises a first gear (126) rotatable with said sleeve (114) and coupled to an input gear (122b) of said reduction gear (122);
and said support means (120) forms an end gear (121) coupled to an output gear (122a) of said reduction gear (122).

9. A roller screw actuator as claimed in claim 8 wherein said first gear (126) is secured to said sleeve (114) so as to prevent relative rotation therebetween.

10. A roller screw actuator as claimed in any preceding claim wherein said inner drive member (112) is said input drive member and said outer drive member (202) is said output drive member.

11. A roller screw actuator as claimed in any of claims 1 to 10 wherein said outer drive member (202) is said input drive member and said inner drive member (112) is said output drive member.

## Patentansprüche

1. Rollengewindestellglied, das folgendes umfasst:
ein inneres Antriebsglied (112);
eine mit dem inneren Antriebsglied (112) koaxiale Hülse (114);
ein äußeres Antriebsglied (202), das mit der Hülse (114) koaxial und relativ zu ihr drehbar ist, wobei es sich bei einem dieser Antriebsglieder um ein Eingangsantriebsglied und bei dem anderen Antriebsglied um ein Ausgangsantriebsglied handelt;
mindestens eine Planetenrolle (116), die drehbar zwischen dem inneren Antriebsglied (112) und der Hülse (114) eingreift, so dass eine Drehbewegung der Hülse (114) die relative lineare Bewegung des inneren Antriebsglieds (112) bewirkt oder eine Drehbewegung des inneren Antriebsglieds (112) die relative lineare Bewegung der Hülse (114) bewirkt;
wobei die Anordnung derart ist, dass in einem ersten, nicht verklemmten Zustand und in einem zweiten, verklemmten Zustand die Vorschubgeschwindigkeit des Gewindestellglieds im Wesentlichen konstant gehalten wird,
**dadurch gekennzeichnet, dass** das Rollengewindestellglied weiter ein Getriebesystem (119) umfasst, das die mindestens eine Planetenrolle an das innere oder das äußere Antriebsglied (112, 114) koppelt;
wobei das Getriebesystem (119) die mindestens eine Planetenrolle (116) an die Hülse (114) und das äußere Antriebsglied (202) koppelt, um dadurch zu bewirken, dass sich die Hülse (114) in der selben Richtung wie das Eingangsantriebsglied mit einer relativ zum Eingangsantriebsglied reduzierten Drehzahl dreht.

2. Rollengewindestellglied nach Anspruch 1, wobei:
im ersten Zustand die Hülse (114) relativ zum äußeren Antriebsglied (202) drehbar ist und Antrieb über die relative Drehung des Eingangsantriebsglieds (202, 112), der mindestens einen Planetenrolle (116), des Getriebesystems (119) und der Hülse (114) an das Ausgangsantriebsglied (202, 112) übertragen wird;
und im zweiten Zustand die Hülse (114) relativ zum äußeren Antriebsglied (202) nicht drehbar ist und Antrieb vom Eingangsglied (202, 112) direkt über nur die Hülse (114) und die mindestens eine Planetenrolle an das Ausgangsglied übertragen wird.

3. Rollengewindestellglied nach Anspruch 1, wobei:
im ersten Zustand Antrieb über die relative Drehung des Eingangsantriebsglieds (202, 112), der mindestens einen Planetenrolle (116), des Getriebesystems (119) und der Hülse (114) an das Ausgangsantriebsglied (202, 112) übertragen wird;
und im zweiten Zustand Antrieb vom Eingangsglied (202, 112) direkt über nur die mindestens eine Planetenrolle an das Ausgangsglied übertragen wird.

4. Rollengewindestellglied nach Anspruch 1, 2 oder 3, wobei im ersten Zustand das Getriebesystem (119) so wirksam ist, dass es die Vorschubgeschwindigkeit des Gewindestellglieds so reduziert, dass sie im Wesentlichen derjenigen des Gewindestellglieds im zweiten Zustand entspricht.

5. Rollengewindestellglied nach einem der Ansprüche 1 bis 4, wobei die mindestens eine Planetenrolle (116) relativ zum inneren und zum äußeren Antriebsglied um ihre Längsachse drehbar ist;
und wobei das Getriebesystem (119) ein Lagermittel (120) umfasst, das relativ zum inneren und zum äußeren Antriebsglied drehbar ist;
und wobei das Lagermittel so angeordnet ist, dass es die mindestens eine Planetenrolle (116) trägt und durch ein Untersetzungsgetriebe (122) an das äußere Antriebsglied (202) und die Hülse (114) gekoppelt ist, so dass die Präzession der mindestens einen Planetenrolle (116) mit einer vorgewählten, relativ zum Eingangsantriebsglied reduzierten Geschwindigkeit um das innere Antriebsglied (112) bewirkt wird.

6. Rollengewindestellglied nach einem der Ansprüche 1 bis 4, wobei die mindestens eine Planetenrolle (116) relativ zum inneren und zum äußeren Antriebsglied um ihre Längsachse drehbar ist;
und wobei das Getriebesystem (119) ein Lagermittel (120) umfasst, das relativ zum inneren und zum äußeren Antriebsglied drehbar ist;
und wobei das Lagermittel so angeordnet ist, dass es die mindestens eine Planetenrolle (116) trägt und durch ein Untersetzungsgetriebe (122) an das äußere Antriebsglied (202) und die Hülse (114) gekoppelt ist, so dass die Präzession der mindestens einen Planetenrolle (116) mit einer vorgewählten, relativ zur Hülse (114) reduzierten Geschwindigkeit um das innere Antriebsglied (112) bewirkt wird.

7. Rollengewindestellglied nach Anspruch 5 oder 6, wobei das Untersetzungsgetriebe (122) drehbar auf dem äußeren Antriebsglied (202) gelagert ist.

8. Rollengewindestellglied nach Anspruch 6 oder 7, wobei:
das Getriebesystem (119) ein erstes Zahnrad (126) umfasst, das mit der Hülse (114) drehbar ist und an ein Eingangszahnrad (122b) des Untersetzungsgetriebes (122) gekoppelt ist;
und das Lagermittel (120) ein Endzahnrad (121) bildet, das an ein Ausgangszahnrad (122a) des Untersetzungsgetriebes (122) gekoppelt ist.

9. Rollengewindestellglied nach Anspruch 8, wobei das erste Zahnrad (126) an der Hülse (114) befestigt ist, um die relative Drehung zwischen ihnen zu verhindern.

10. Rollengewindestellglied nach einem der vorangehenden Ansprüche, wobei das innere Antriebsglied (112) das Eingangsantriebsglied ist und das äußere Antriebsglied (202) das Ausgangsantriebsglied ist.

11. Rollengewindestellglied nach einem der Ansprüche 1 bis 10, wobei das äußere Antriebsglied (202) das Eingangsantriebsglied ist und das innere Antriebsglied (112) das Ausgangsantriebsglied ist.

## Revendications

1. Actionneur de vis à rouleaux qui comprend :
un organe d'entraînement intérieur (112) ;
un manchon (114) coaxial avec ledit organe d'entraînement intérieur (112) ;
un organe d'entraînement extérieur (202) coaxial avec ledit manchon (114) et mobile par rapport à celui-ci, un desdits organes d'entraînement étant un organe d'entraînement d'entrée et l'autre desdits organes étant un organe d'entraînement de sortie ;
au moins un rouleau planétaire (106) mis en prise d'une manière mobile entre ledit organe d'entraînement intérieur (112) et ledit manchon (114) de sorte que le mouvement rotatif de l'un desdits manchon (114) et organe d'entraînement intérieur (112) entraîne un mouvement linéaire relatif de l'autre desdits manchon (114) et organe d'entraînement intérieur (112) ; dans lequel la disposition est telle que dans un premier état non bloqué et dans un deuxième état bloqué, le taux d'avance de l'actionneur de vis est maintenu en grande partie constant,
**caractérisé en ce que** l'actionneur de vis à rouleaux comprend en outre un système d'engrenages (119) accouplant ledit au moins un rouleau planétaire à l'un desdits organes d'entraînement intérieur et extérieur (112, 114) ;
dans lequel ledit système d'engrenages (119) accouple ledit au moins un rouleau planétaire (116) audit manchon (114) et audit organe d'entraînement extérieur (202) entraînant ainsi ledit manchon (114) à tourner dans le même sens que ledit organe d'entraînement d'entrée à une vitesse réduite par rapport audit organe d'entraînement d'entrée.

2. Actionneur de vis à rouleaux tel que revendiqué à la revendication 1 dans lequel :
dans ledit premier état ledit manchon (114) est mobile par rapport audit organe d'entraînement extérieur (202) et l'entraînement est transmis audit organe d'entraînement de sortie (202, 112) au moyen d'une rotation relative dudit organe d'entraînement intérieur (202, 112), dudit au moins un rouleau planétaire (116), dudit système d'engrenages (119) et dudit manchon (114) ;
et dans ledit deuxième état ledit manchon (114) n'est pas mobile par rapport audit organe d'entraînement extérieur (202) et l'entraînement est transmis depuis ledit organe d'entrée (202, 112) jusqu'audit organe de sortie directement au moyen seulement dudit manchon (114) et dudit au moins un rouleau planétaire.

3. Actionneur de vis à rouleaux tel que revendiqué à la revendication 1 dans lequel :
dans ledit premier état, l'entraînement est transmis audit organe d'entraînement de sortie (202,112) au moyen d'une rotation relative dudit organe d'entraînement d'entrée (202,112), dudit au moins un rouleau planétaire (116) dudit système d'engrenages (119) et dudit manchon (114) ;
et dans ledit deuxième état l'entraînement est transmis depuis ledit organe d'entrée (202, 112) jusqu'audit organe de sortie directement au moyen seulement dudit au moins un rouleau planétaire.

4. Actionneur de vis à rouleaux tel que revendiqué à la revendication 1, 2 ou 3 dans lequel dans ledit premier état, le système d'engrenages (119) est exploitable pour réduire le taux d'avance de l'actionneur de vis afin de le faire correspondre en grande partie à celui de l'actionneur de vis dans ledit deuxième état.

5. Actionneur de vis à rouleaux tel que revendiqué dans l'une quelconque des revendications 1 à 4 dans lequel ledit au moins un rouleau planétaire (116) est mobile par rapport auxdits organes d'entraînement intérieur et extérieur autour de son axe longitudinal ;
et ledit système d'engrenages (119) comprend, un moyen de support (120) mobile par rapport auxdits organes d'entraînement intérieur et extérieur ;
et dans lequel ledit moyen de support est disposé de façon à porter ledit au moins un rouleau planétaire (116) et est accouplé audit organe d'entraînement extérieur (202) et audit manchon (114) par un engrenage de réduction (122) de façon à entraîner la précession dudit au moins un rouleau planétaire (116) autour dudit organe d'entraînement intérieur (112) à une vitesse réduite présélectionnée par rapport audit organe d'entraînement d'entrée.

6. Actionneur de vis à rouleaux tel que revendiqué dans l'une quelconque des revendications 1 à 4 dans lequel ledit au moins un rouleau planétaire (116) est mobile par rapport auxdits organes d'entraînement intérieur et extérieur autour de son axe longitudinal ;
et ledit système d'engrenages (119) comprend un moyen de support (120) mobile par rapport auxdits organes d'entraînement intérieur et extérieur ;
et dans lequel ledit moyen de support est disposé de façon à porter ledit au moins un rouleau planétaire (116) et est accouplé audit organe d'entraînement extérieur (202) et audit manchon (114) par un engrenage de réduction (122) de façon à entraîner la précession dudit au moins un rouleau planétaire (116) autour dudit organe d'entraînement intérieur (112) à une vitesse réduite présélectionnée par rapport audit manchon (14).

7. Actionneur de vis à rouleaux tel que revendiqué à la revendication 5 ou 6 dans lequel ledit engrenage de réduction (122) est supporté d'une manière mobile sur ledit organe d'entraînement extérieur (202).

8. Actionneur de vis à rouleaux tel que revendiqué à la revendication 6 ou 7 dans lequel :
ledit système d'engrenages (119) comprend un premier engrenage (126) mobile avec ledit manchon (114) et accouplé à un engrenage d'entrée (122b) dudit engrenage de réduction (122) ;
et ledit moyen de support (120) forme un engrenage d'extrémité (121) accouplé à un engrenage de sortie (122a) dudit engrenage de réduction (122).

9. Actionneur de vis à rouleaux tel que revendiqué à la revendication 8 dans lequel ledit premier engrenage (126) est fixé audit manchon (114) de façon à empêcher une rotation relative de l'un par rapport à l'autre.

10. Actionneur de vis à rouleaux tel que revendiqué dans l'une quelconque des revendications précédentes dans lequel ledit organe d'entraînement intérieur (112) est ledit organe d'entraînement d'entrée et ledit organe d'entraînement extérieur (202) est ledit organe d'entraînement de sortie.

11. Actionneur de vis à rouleaux tel que revendiqué dans l'une quelconque des revendications 1 à 10 dans lequel ledit organe d'entraînement extérieur (202) est ledit organe d'entraînement d'entrée et ledit organe d'entraînement intérieur (112) est ledit organe d'entraînement de sortie.
